# EUROPEAN PATENT SPECIFICATION

(11) **EP 4 230 512 B1**
(45) Date of publication and mention of the grant of the patent: **13.08.2025**
(21) Application number: 23150118.0
(22) Date of filing: 03.01.2023
(51) Int. Cl.: B63B 1/32, B63B 19/08

(54) **MARINE VESSEL**
WASSERFAHRZEUG
NAVIRE

(30) Priority: 16.02.2022 JP 2022021815
(43) Date of publication of application: 23.08.2023
(73) Proprietor: Mitsubishi Heavy Industries, Ltd., Tokyo 100-8332 (JP)
(72) Inventor: MATSUMOTO, Daisuke, Tokyo, 100-8332 (JP); KAWABUCHI, Makoto, Tokyo, 100-8332 (JP); KUBOTA, Masaya, Tokyo, 100-8332 (JP)
(74) Representative: Studio Torta S.p.A.

(56) References cited:
- US-A1- 2009 165 694
- US-B1- 9 180 933
- WARTSILA: "Ship design, improvement to reduce fuel consumption", 3 February 2009 (2009-02-03), XP055139507, Retrieved from the Internet <URL:http://dc359.4shared.com/doc/h3fUxkfH/preview.html> [retrieved on 20140911]

## Description

### Technical Field

The present disclosure relates to a marine vessel.

### Background Art

In a marine vessel having a thin body and a high service speed such as a research ship, a school ship, and a cable-laying ship, the flow velocity at the stern is high when the marine vessel sails in a service speed range. At this time, the negative pressure at the stern increases, and the sinking amount of the stern increases. Accordingly, the stern is enlarged in terms of the resistance of the ship, and the overall resistance of the ship rapidly increases. This tendency is particularly noticeable in high-speed vessels having a Froude number of 0.3 or greater, for example.

As a stern shape effective for reducing the resistance of a ship sailing in a service speed range, Patent Document 1 discloses a structure in which an additional member having a triangular cross section is provided at a stern end of an existing transom stern. The additional member protrudes from the stern end toward a rear side in a travel direction and is inclined so as to be positioned downward toward the rear side. The additional member changes a flow field at the stern to suppress wave breaking and wave making, thereby reducing wave-making resistance of the ship.

### Citation List

### Patent Literature

Patent Document 1: JP 3490392 B
Patent Document 2: US 9,180,933 B1.

### Summary of Invention

### Technical Problem

However, in a marine vessel including an opening for lowering, and lifting and housing, an investigation and monitoring instrument, an underwater sailing body, a small boat, or a fishing net at an end portion on a stern side, the additional member described in Patent Document 1 cannot be installed below the opening because the additional member interferes with an investigation and monitoring instrument or other component during lowering and lifting. Accordingly, in the case of a marine vessel including an opening for lowering, and lifting and housing, an investigation and monitoring instrument or other component at an end portion on a stern side, there remains a problem that the wave-making resistance of the ship cannot be sufficiently reduced.

The present disclosure has been made to solve the problem described above, and an object of the present disclosure is to provide a marine vessel that has a function for lowering, and lifting and housing, an investigation and monitoring instrument, an underwater sailing body, a small boat, a fishing net, or the like at an end portion on a stern side, and that is capable of reducing wave-making resistance of a ship.

### Solution to Problem

In order to solve the problem described above, a marine vessel according to claim 1 is provided.

### Advantageous Effects of Invention

According to a marine vessel of the present disclosure, it is possible to provide a marine vessel that has a function for lowering, and lifting and housing, an investigation and monitoring instrument, an underwater sailing body, a small boat, a fishing net, or the like at an end portion on a stern side, and that is capable of reducing wave-making resistance of a ship.

### Brief Description of Drawings

FIG. 1 is a side view of a marine vessel according to an embodiment of the present disclosure.
FIG. 2 is a lower perspective view illustrating a stern-side structure of a marine vessel according to an embodiment of the present disclosure.
FIG. 3 is a side view illustrating a shape of a stern according to an embodiment of the present disclosure.
FIG. 4 is a plan view illustrating a shape of a stern according to an embodiment of the present disclosure.
FIG. 5 is a front view illustrating a shape of a stern according to an embodiment of the present disclosure.
FIG. 6 is an upper perspective view illustrating a shape of a stern according to an embodiment of the present disclosure.
FIG. 7 is a graph showing changes in residual resistance relative to a Froude number.
FIG. 8 is a front view illustrating a shape of a stern according to a modification example of the present disclosure.

### Description of Embodiments

Hereinafter, a marine vessel according to an embodiment of the present disclosure will be described with reference to the drawings. In the present embodiment, as an example of a marine vessel, a marine vessel having a thin body and a high service speed such as a research ship, a school ship, and a cable-laying ship will be described.

### Marine Vessel

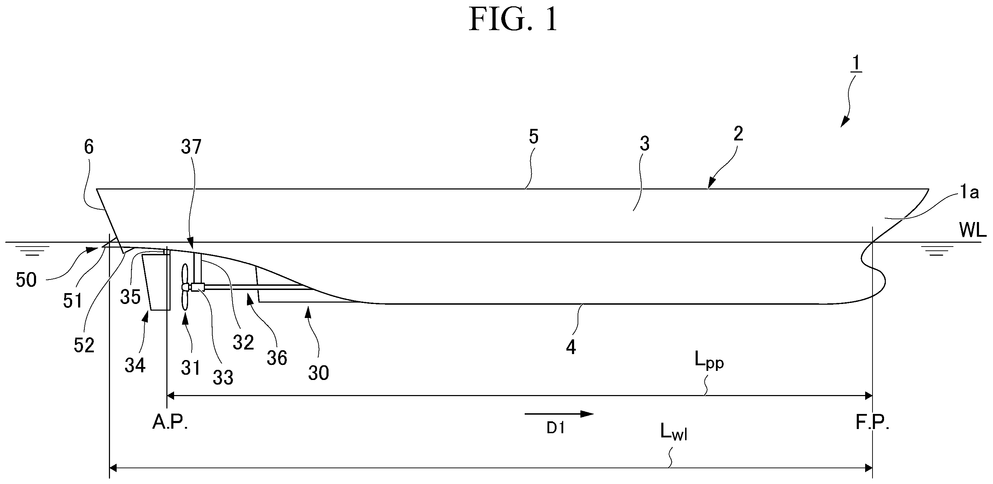

As illustrated in FIG. 1, a marine vessel 1 is a marine vessel 1 that has a transom stern structure and is formed in a long and thin shape in a travel direction D1.

Hereinafter, a front side of the marine vessel 1 in the travel direction D1 may be referred to as a "bow side", and a rear side thereof in the travel direction D1 may be referred to as a "stern side". A direction that is orthogonal to the travel direction D1 of the marine vessel 1 along a horizontal plane may be referred to as a ship width direction D2.

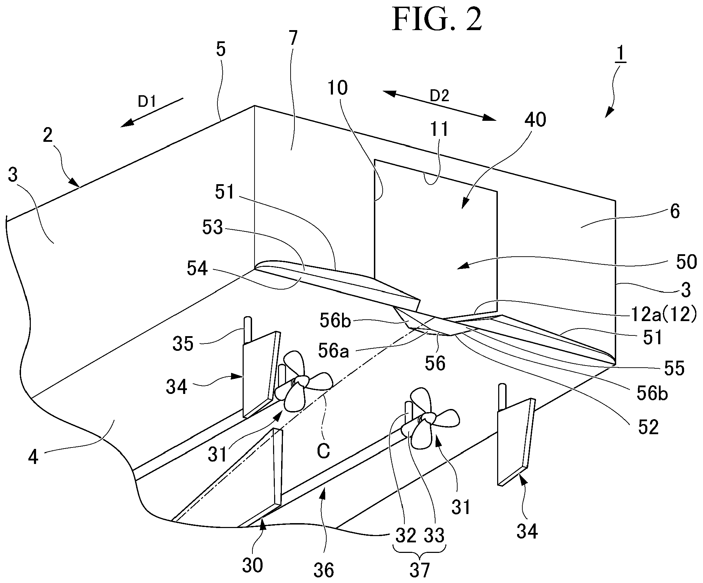

The marine vessel 1 is a displacement-type marine vessel. As illustrated in FIGS. 1 and 2, the marine vessel 1 includes a ship 2, a center skeg 30, a propeller 31, a rudder 34, a stern door 40, and a stern appendage 50.

### Ship

The ship 2 is a structure that floats on a water surface by generating buoyancy. The ship 2 includes a broadside 3, a ship bottom 4, an upper deck 5, and a stern end 6.

A pair of the broadsides 3 are disposed facing each other in the ship width direction D2. The ship bottom 4 connects lower portions of the pair of the broadsides 3. In a side view, an end portion of the ship bottom 4 on the stern side is slightly inclined so as to be positioned upward toward the stern side. The upper deck 5 is provided across upper portions of the pair of the broadsides 3. An upper structure such as a bridge (not illustrated) is installed at the upper deck 5. The stern end 6 is provided across end portions of the pair of the broadsides 3 on the stern side.

The broadsides 3, the ship bottom 4, the upper deck 5, and the stern end 6 give the ship 2 a box shape.

### Center Skeg

The center skeg 30 and the propeller 31 are provided at the ship bottom 4.

The center skeg 30 is formed in a plate shape. The center skeg 30 is disposed along a ship bottom center line C that passes through an intermediate portion of the ship bottom 4 in the ship width direction D2 and extends along the travel direction D1. The center skeg 30 is provided closer to the stern side of the ship 2.

### Propeller

The propeller 31 is provided on the stern side of the center skeg 30 and on a front side of the stern end 6 in the travel direction D1. Two of the propellers 31 are disposed facing each other in the ship width direction D2 across the ship bottom center line C. Each of the propellers 31 is connected to the ship bottom 4 via a propeller shaft 36. The propeller shaft 36 extends from a leading end of the propeller 31 in the travel direction D1 through to the inside of the ship bottom 4. A leading end portion of the propeller shaft 36 is connected to a motor (not illustrated) provided inside the ship bottom 4. A trailing end portion of the propeller shaft 36 is rotatably supported by a shaft bracket 37. The shaft bracket 37 includes a strut 32 and a tubular support part 33. The strut 32 extends downward from the ship bottom 4. The tubular support part 33 is formed in a tubular shape extending in the travel direction D1. The propeller shaft 36 is inserted into the tubular support part 36. The tubular support part 33 rotatably supports the propeller shaft 36. The propeller 31 is connected to a trailing end portion of the propeller shaft 36 on a rear side of the shaft bracket 37. The propeller 31 is driven to rotate integrally with the propeller shaft 36 by a driving force of the motor (not illustrated) inside the ship bottom 4. Rotation of the propeller 31 causes a propulsive force in the marine vessel 1.

Note that the marine vessel 1 may include a single-shaft stern and one propeller 31 instead of the center skeg 30 and the two propellers 31.

### Rudder

The rudder 34 is provided on the stern side of the center skeg 30 and on a front side of the stern end 6 in the travel direction D1. A pair of rudders 34 are provided facing each other in the ship width direction D2 across the ship bottom center line C. Each of the rudders 34 is provided on an outer side in the ship width direction D2 as compared to the propeller 31 that is positioned on the same side as the rudder 34 relative to the ship bottom center line C in the ship width direction D2. More specifically, the rudder 34 is installed on an outer side of an extension line of the rotation center line of the corresponding propeller 31 in the ship width direction D2. The rudder 34 is mounted at the ship bottom 4 via a rudder post 35. The rudder post 35 protrudes downward from the ship bottom 4. The front portion of an upper end of the rudder 34 is connected to a lower end of the rudder post 35. The angle of the rudder 24 around the rudder post 35 is configured to be variable.

Hereinafter, a perpendicular line passing through an intersection of a load water line WL and a bow 1a of the marine vessel 1 and extending in a vertical direction is referred to as a foremost perpendicular line F.P., and a perpendicular line passing through a center axis of the rudder post 35 and extending in the vertical direction is referred to as an aftermost perpendicular line A.P. A distance in the travel direction D1 between the foremost perpendicular line F.P. and the aftermost perpendicular line A.P. is referred to as an inter-perpendicular length Lpp. A distance between the foremost perpendicular line F.P. and a perpendicular line passing through an intersection of a trailing end portion of the stern of the marine vessel 1 (in the present embodiment, a flap 51 to be described later) and the load water line WL and extending in the vertical direction is referred to as a water line length Lwl.

### Housing Portion

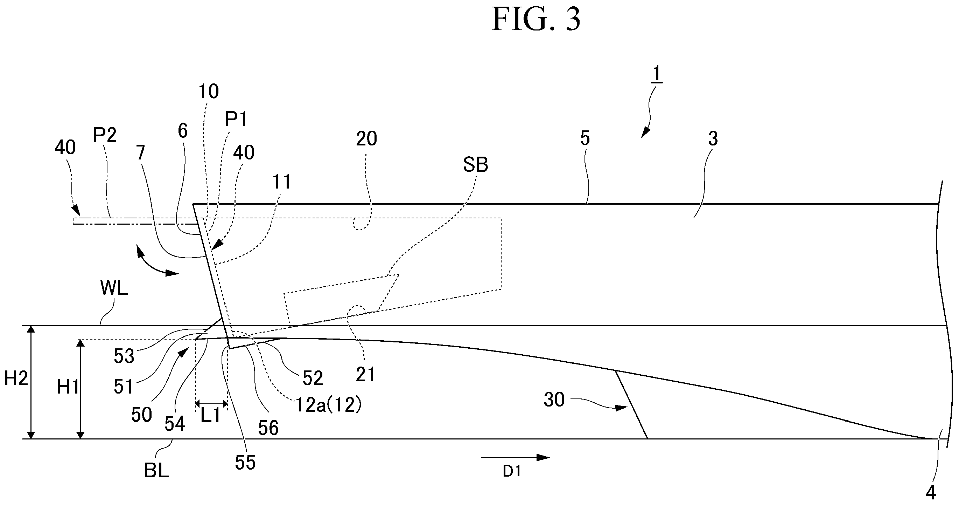

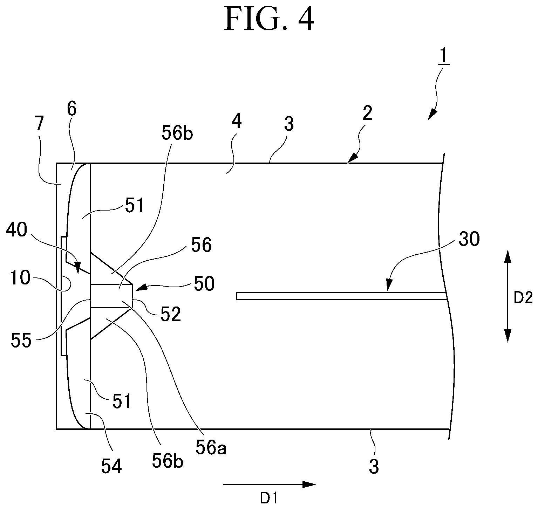

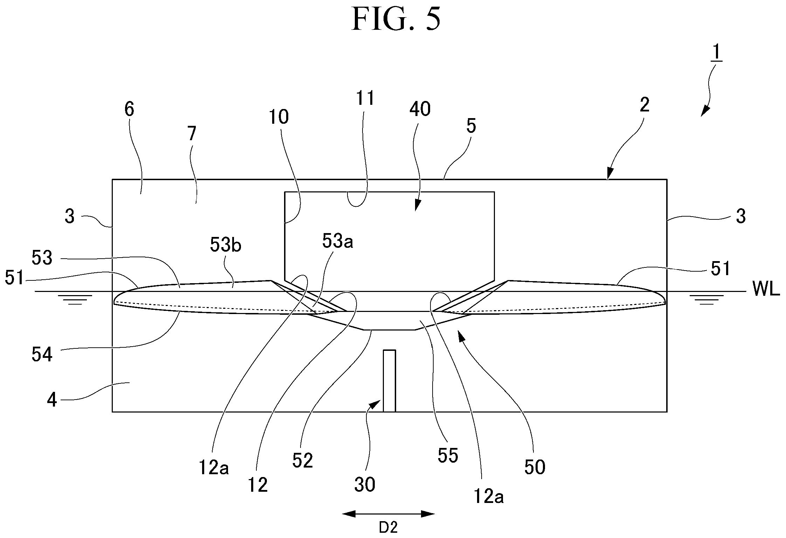

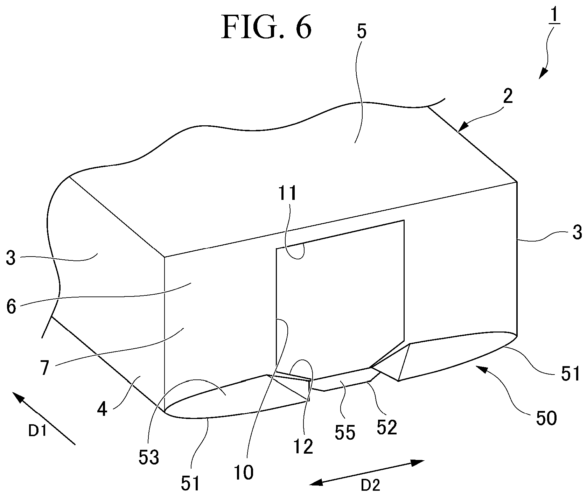

As illustrated in FIG. 3, a housing portion 20 is provided inside the ship 2 on the stern side. In FIGS. 3 to 6, illustration of the propellers 31 and the rudders 34 is omitted.

For example, a small boat SB is lifted and housed in the housing portion 20. The housing portion 20 is used as, for example, a dock for housing the small boat SB. Note that the housing portion 20 may house, for example, an investigation and monitoring instrument, an underwater sailing body, a fishing net, and the like apart from the small boat SB. The housing portion 20 includes a slope 21 at a lower portion thereof. In a side view, the slope 21 is inclined so as to be positioned downward toward the stern side. The slope 21 serves as a so-called ramp for guiding the small boat SB into the ship 2.

As illustrated in FIGS. 2 to 6, the stern end 6 is the stern end 6 of a so-called transom stern formed in a rectangular shape. Hereinafter, an end face of the stern end 6 on the rear side in the travel direction D1 may be referred to as a stern end face 7.

### Stern End Face

The stern end face 7 is formed rising from an end portion of the ship 4 on the stern side. The stern end face 7 is slightly inclined relative to a vertical plane so as to be positioned closer to the bow side toward the bottom of the stern end face 7. A stern opening 10 is formed in the stern end face 7.

### Stern Opening

The stern opening 10 opens toward the stern side. The stern opening 10 allows the housing portion 20 to communicate with an external space. The stern opening 10 includes an upper opening 11 and a lower opening 12. The upper opening 11 is formed in a rectangular shape in a front view. An upper end of the upper opening 11 extends in the ship width direction D2. The lower opening 12 is connected to a lower end of the upper opening 11 and extends from the lower end of the upper opening 11 to a lower end of the stern end face 7. The lower opening 12 is formed in a trapezoidal shape having a width tapering toward the bottom of the lower opening 12 in a front view. A lower end of the lower opening 12 is connected to an end portion of the slope 21 on the stern side.

Hereinafter, side ends of the lower opening 12 facing each other in the ship width direction D2 may be referred to as lower side ends 12a.

A stern door 40 is provided at the stern opening 10.

### Stern Door

The stern door 40 can open and close the stern opening 10. The stern door 40 is attached to an upper end of the stern opening 10 so as to be rotatable around the upper end. Accordingly, the stern door 40 is rotatable between a closed position P1 at which the stern opening 10 is closed and an open position P2 at which the stern opening 10 is open. The stern door 40 is positioned in the stern opening 10 at the closed position P1. A rear surface of the stern door 40 is substantially flush with the stern end face 7 at the closed position P1. The stern door 40 prevents waves from entering the housing portion 20 at the closed position P1. The stern door 40 is connected to the upper end of the stern opening 10 and is positioned on the stern side of the stern opening 10 at the open position P2.

### Stern Appendage

The stern appendage 50 is provided at an end portion of the marine vessel 1 on the stern side. The stern appendage 50 includes a flap 51 and a wedge 52.

### Flap

The flap 51 is provided at the stern end face 7. A pair of flaps 51 are provided separated from each other in the ship width direction D2 while avoiding the stern opening 10. The pair of flaps 51 are formed in the same shape.

The flap 51 protrudes from the stern end face 7 toward the stern side. The flap 51 extends in the ship width direction D2. The flap 51 is provided such that the position in the ship width direction D2 of an end portion of the flap 51 on an inner side in the ship width direction D2 overlaps with the position in the ship width direction D2 of the stern opening 10. The flap 51 is formed in a triangular cross-sectional shape that becomes smaller in height in the vertical direction toward the stern side in a side view. The flap 51 includes an upper flap surface 53 and a lower flap surface 54.

### Upper Flap Surface

The upper flap surface 53 is inclined so as to be positioned downward toward the stern side. The upper flap surface 53 includes a first upper surface 53a and a second upper surface 53b.

The first upper surface 53a is a portion of the upper flap surface 53 of which the position in the ship width direction D2 overlaps with the position in the ship width direction D2 of the stern opening 10. The first upper surface 53a is formed in a planar shape along the lower side end 12a of the stern opening 10.

The second upper surface 53b is connected to the first upper surface 53a and extends outward from the first upper surface 53a in the ship width direction D2. The second upper surface 53b is formed in a curved surface shape so as to be positioned downward toward the outer side in the ship width direction D2.

### Lower Flap Surface

The lower flap surface 54 extends to the stern side and is continuous from the ship bottom 4. The lower flap surface 54 extends in a region at or below a lower end of the stern end face 7. In the present embodiment, the lower flap surface 54 is formed in a planar shape so as to be positioned downward toward the stern side.

Of the flap 51 described above, a portion including the second upper surface 53b is formed so that the thickness in the vertical direction becomes greater toward an inner side in the ship width direction D2.

Here, a height from a base line BL of the ship bottom 4 to a lower end of the flap 51 in the vertical direction is H1, and a height from the base line BL of the ship bottom 4 to the load water line WL in the vertical direction is H2. Also, a length of the flap 51 in the travel direction D1 is L1.

In the marine vessel 1 according to the present embodiment, a Froude number Fn of a designed speed is 0.20 or greater and 0.50 or less.

In particular, when the marine vessel 1 is a displacement-type marine vessel, the inter-perpendicular length Lpp is 50 m or greater and 300 m or less, and the Froude number Fn of a designed speed is 0.20 or greater and 0.50 or less, the height H1 from the base line BL of the ship bottom 4 to the lower end of the flap 51 is preferably set to be 80% or greater and 120% or less of the height H2 from the base line BL of the ship bottom 4 to the load water line WL, and the length L1 of the flap 51 in the travel direction D1 is preferably set to be 0.1% or greater and 5% or less of the inter-perpendicular length Lpp.

### Wedge

The wedge 52 is provided at an end portion of the ship bottom 4 on the stern side. The wedge 52 is provided without protruding on the stern side of the stern end face 7. The wedges 52 protrudes downward from the ship bottom 4. The wedge 52 is provided between the pair of flaps 51 in the ship width direction D2. The wedge 52 extends in the ship width direction D2. The wedge 52 is provided such that the positions in the ship width direction D2 of end portions of the wedge 52 on outer sides in the ship width direction D2 overlap with the positions in the ship width direction D2 of an end portion of the respective flaps 51 on an inner side in the ship width direction D2. That is, end portions of the wedge 52 on outer sides in the ship width direction D2 overlap with an end portion of the respective flaps 51 on an inner side in the ship width direction D2. The wedge 52 is formed in a symmetrical shape with respect to the ship bottom center line C. The wedge 52 is formed in a triangular cross-sectional shape having a height reducing in the vertical direction toward the bow side in a side view. The wedge 52 includes a rear wedge surface 55 and a lower wedge surface 56.

### Rear Wedge Surface

The rear wedge surface 55 is formed along the stern end face 7. The rear wedge surface 55 is slightly inclined with respect to a vertical plane so as to be positioned closer to the bow side toward the bottom of the rear wedge surface 55 in a side view. The rear wedge surface 55 is formed in a trapezoidal shape having a width narrowing toward the bottom of the rear wedge surface 55 in a front view.

### Lower Wedge Surface

The lower wedge surface 56 is smoothly connected to the ship bottom 4. The lower wedge surface 56 includes a first lower surface 56a and a second lower surface 56b.

The first lower surface 56a is a portion of the lower wedge surface 56 that is positioned on inner sides of the pair of flaps 51 in the ship width direction D2. The first lower surface 56a is formed in a planar shape extending from the ship bottom 4 to the stern side so as to be positioned downward toward the stern side in a side view. The first lower surface 56a connects the ship bottom 4 and a lower end of the rear wedge surface 55.

A pair of second lower surfaces 56b are provided on outer sides of the first lower surface 56a in the ship width direction D2. Each of the second lower surfaces 56b extends from a side end of the first lower surface 56a on an outer side in the ship width direction D2 farther toward the outer side in the ship width direction D2. The second lower surface 56b smoothly connects the side end of the first lower surface 56a on the outer side in the ship width direction D2 and the ship bottom 4. A trailing end of the second lower surface 56b on the stern side is connected to a side end of the rear wedge surface 55 on an outer side in the ship width direction D2. The second lower surface 56b is formed in a planar shape so as to come closer to the ship bottom 4 toward an outer side in the ship width direction D2. Also, the second lower surface 56b is formed in a triangular shape so that the dimension in the travel direction D1 becomes smaller toward an outer side in the ship width direction D2 in a plan view.

### Operational Effects

The marine vessel 1 according to the present embodiment achieves the following operational effects.

In the present embodiment, the marine vessel 1 includes, at the stern end face 7, the pair of flaps 51 separated from each other in the ship width direction D2 while avoiding the stern opening 10.

According to the present embodiment, the marine vessel 1 can lower, and lift and house, an investigation and monitoring instrument, an underwater sailing body, a small boat SB, a fishing net, and the like at an end portion of the marine vessel 1 on the stern side via the stern opening 10. Furthermore, the marine vessel 1 can suppress wave making around the stern by the flaps 51 without causing interference between the flaps 51 and an investigation and monitoring instrument or similar component. Accordingly, it is possible to reduce wave-making resistance at the stern and improve fuel economy performance. Furthermore, the improved fuel economy performance can reduce transportation costs.

In the present embodiment, the flap 51 includes the lower flap surface 54 extending to the stern side and continuous from the ship bottom 4. The lower flap surface 54 extends in a region at or below a lower end of the stern end face 7.

According to the present embodiment, the marine vessel 1 can suppress wave making around the stern by the flaps 51. This makes it possible to further reduce wave-making resistance at the stern and further improve fuel economy performance.

In the present embodiment, the wedge 52 is provided at an end portion of the ship bottom 4 on the stern side between the pair of flaps 51 in the ship width direction D2.

According to the present embodiment, the marine vessel 1 can further suppress wave making around the stern by the flaps 51 and the wedge 52. This makes it possible to further reduce wave-making resistance at the stern and further improve fuel economy performance.

In the present embodiment, the positions in the ship width direction D2 of end portions of the wedge 52 on outer sides in the ship width direction D2 overlap with the positions in the ship width direction D2 of an end portion of the respective flaps 51 on an inner side in the ship width direction D2.

According to the present embodiment, a flow passing between each of the flaps 51 and the wedge 52 can be suppressed. This makes it possible to further reduce wave-making resistance at the stern and further improve fuel economy performance.

Also, by using the flaps 51 and the wedge 52 in combination, the water line length Lwl can be increased by the length of the flaps 51 as compared to a case where only the wedge 52 is provided throughout the ship bottom 4 in the ship width direction D2. This makes it possible to further reduce wave-making resistance at the stern and further improve fuel economy performance.

In the present embodiment, the wedge 52 includes the lower wedge surface 56 smoothly connected to the ship bottom 4.

According to the present embodiment, the generation of flow separation at end portions of the wedge 52 on the ship width direction D2 can be suppressed. This makes it possible to further reduce wave-making resistance at the stern and further improve fuel economy performance.

In the present embodiment, a Froude number Fn of a designed speed of the marine vessel 1 is 0.20 or greater and 0.50 or less.

According to the present embodiment, the effect of reducing wave making around the stern by the stern appendage 50 such as the flaps 51 and the wedge 52 can be more favorably achieved.

In particular, the effect of reducing wave-making resistance by the flaps 51 and the wedge 52 is most effectively achieved when the marine vessel 1 is a displacement-type marine vessel, the inter-perpendicular length Lpp is 50 m or greater and 300 m or less, the Froude number Fn of a designed speed is 0.20 or greater and 0.50 or less, and the marine vessel 1 includes the center skeg 30 and two propellers 31 or the marine vessel 1 includes a single-shaft stern and one propeller 31. Furthermore, the effect of reducing wave-making resistance by the flaps 51 and the wedge 52 is further favorably achieved when the height H1 from the base line BL of the ship bottom 4 to the lower end of the flap 51 is set to be 80% or greater and 120% or less of the height H2 from the base line BL of the ship bottom 4 to the load water line WL, and the length L1 of the flap 51 in the travel direction D1 is set to be 0.1% or greater and 5% or less of the inter-perpendicular length Lpp.

The effect of reducing wave-making resistance is more favorably achieved when a vertex angle that is an angle between the ship bottom center line C (see FIG. 2) of the ship bottom 4 and a leading end of the lower flap surface 54 is set to be equal to or less than a vertex angle that is an angle between the ship bottom center line C of the ship bottom 4 and a leading end of the lower wedge surface 56. Furthermore, the effect of reducing wave-making resistance is most effectively achieved when the vertex angle between the ship bottom center line C of the ship bottom 4 and the leading end of the lower flap surface 54 is 0 degrees or greater and 30 degrees or less and the vertex angle between the ship bottom center line C of the ship bottom 4 and the leading end of the lower wedge surface 56 is 0 degrees or greater and 40 degrees or less.

In the present embodiment, the marine vessel 1 includes the stern door 40 that opens and closes the stern opening 10.

According to the present embodiment, for example, when following waves are received from the stern side during sailing, an increase in resistance that may occur in the waves can be suppressed by disposing the stern door 40 at the closed position P1. This makes it possible to further reduce wave-making resistance at the stern.

In the present embodiment, a portion of the flap 51 including the second upper surface 53b is formed so that the thickness in the vertical direction becomes greater toward an inner side in the ship width direction D2.

According to the present embodiment, the strength of the flap 51 can be ensured to such a degree that the flap 51 can sufficiently withstand wave making around the stern.

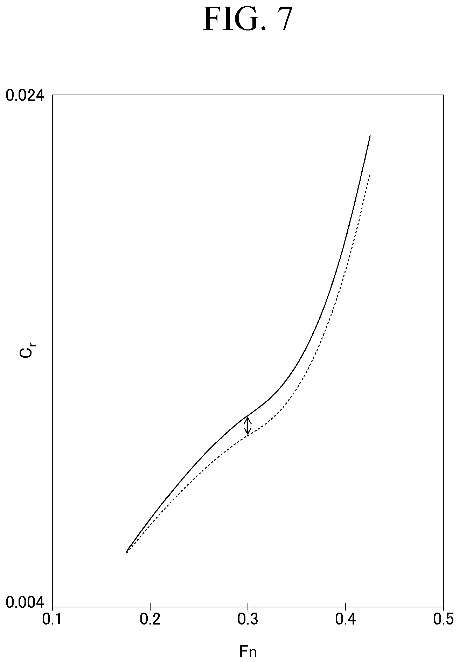

Next, a result of a water tank test in which the effect of the above-described stern appendage 50 according to the present embodiment was confirmed will be described with reference to FIG. 7. In FIG. 7, the horizontal axis represents Froude number Fn, and the vertical axis represents the residual resistance coefficient Cr. Here, the residual resistance coefficient Cr is a coefficient indicating a magnitude of residual resistance, and the residual resistance contains viscous pressure resistance and wave-making resistance.

The solid line in the drawing indicates the water tank test result of a comparative example (the marine vessel 1 without the stern appendage 50), and the dashed line indicates the water tank test result of the marine vessel 1 including the stern appendage 50 according to the present embodiment.

As the test results, the transitions of the residual resistance coefficient Cr relative to the Froude number Fn in a range of 0.1 or greater to 0.5 or less is shown in FIG. 7. In each of the test results shown in FIG. 7, the residual resistance coefficient Cr transitions in a range of 0.004 or greater to 0.024 or less.

As shown in FIG. 7, it can be easily understood that, while the transition of the residual resistance coefficient Cr relative to the Froude number Fn of the marine vessel 1 including the stern appendage 50 according to the present embodiment is substantially the same in form as that of the residual resistance coefficient Cr of the comparative example, the residual resistance coefficient Cr of the marine vessel 1 including the stern appendage 50 is lower than that of the comparative example in a range in which the Froude number Fn is larger than 0.20. In particular, a reduction ratio of the residual resistance coefficient Cr is large in a range in which the Froude number Fn is around 0.30. When the Froude number Fn is 0.30, the residual resistance coefficient Cr is reduced by 7% from the comparative example.

As described above, the wave-making resistance can be reduced by disposing the stern appendage 50 according to the present embodiment at the stern. That is, according to the marine vessel 1 including the stern appendage 50 according to the present embodiment, it is possible to mainly suppress the wave-making resistance contained in the residual resistance and improve fuel economy performance. The effect of reducing wave-making resistance by the stern appendage 50 is indicated by the reduction in the residual resistance coefficient Cr in the test result shown in FIG. 7. Thus, it can be said that the reduction in wave-making resistance by the stern appendage 50 is particularly favorably achieved in a range in which the Froude number Fn is around 0.30.

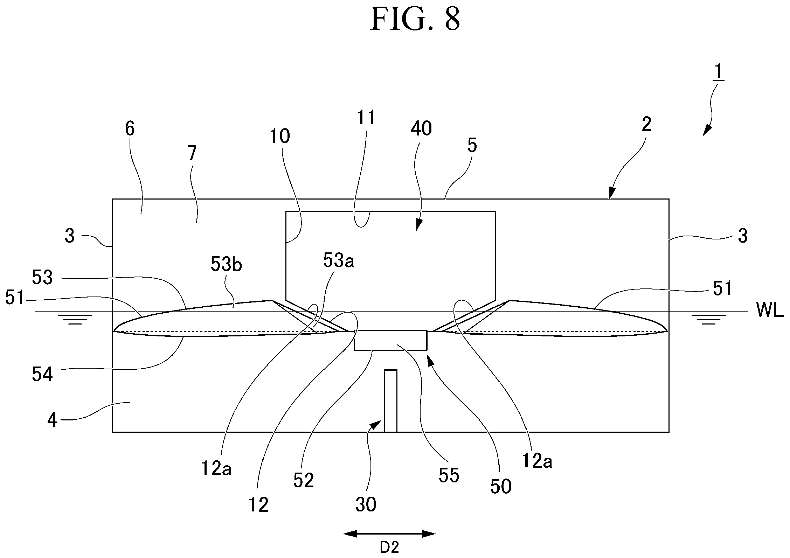

Next, a modification example will be described with reference to FIG. 8.

As in the modification example illustrated in FIG. 8, positions in the ship width direction D2 of both end portions of the wedge 52 on outer sides in the ship width direction D2 need not overlap with the positions of the respective flaps 51 in the ship width direction D2. In the present modification example, each of both end portions of the wedge 52 on outer sides in the ship width direction D2 is formed in a planar shape substantially perpendicular to the ship bottom 4.

### Other Embodiments

An embodiment according to the present disclosure has been described in detail with reference to the drawings. However, the specific configuration of the present disclosure is not limited to this embodiment. Design change without departing from the main gist of the present disclosure or the like is also included.

Note that, in the embodiment described above, the marine vessel 1 is a displacement-type marine vessel, but the present invention is not limited thereto. The marine vessel 1 may be a planning-type marine vessel.

Note that, in the embodiment described above, the lower opening 12 of the stern opening 10 extends to the lower end of the stern end face 7, but the present invention is not limited thereto. The lower end of the lower opening 12 may be positioned above the lower end of the stern end face 7, or the lower opening 12 may extend to a position at which the lower end of the lower opening 12 overlaps with the wedge 52. When the lower opening 12 extends to the position at which the lower end of the lower opening 12 overlaps with the wedge 52, the small boat SB or the like can be lifted and housed more easily than when the range of the lower opening 12 is delimited at or above the lower end of the stern end face 7.

Note that, in the embodiment described above, a case where the stern opening 10 is provided with the stern door 40 has been described, but the present invention is not limited thereto. The stern opening 10 need not be provided with the stern door 40. In this case, the marine vessel 1 is, for example, a fishing ship or a research ship, and the slope 21 connects the lower end of the stern opening 10 and the upper surface of the upper deck 5. In the marine vessel 1, a fishing net, an investigation and monitoring instrument, or the like can be lowered, and lifted and housed, through the slope 21 and the stern opening 10.

Note that, in the embodiment described above, the lower flap surface 54 is inclined so as to be positioned downward toward the stern side, but the present invention is not limited thereto. The lower flap surface 54 may be provided along a horizontal plane.

Note that, in the embodiment described above, the rudder 34 is installed on an outer side of an extension line of the rotation center line of the corresponding propeller 31 in the ship width direction D2, but the present invention is not limited thereto. The rudder 34 may be disposed on the extension line of the rotation center line of the propeller 31.

### Notes

The marine vessel 1 according to each embodiment of the present disclosure is understood as follows, for example.

(1) A marine vessel 1 according to a first aspect includes a ship 1 and a pair of flaps 51. The ship 2 includes a ship bottom 4, a stern end face 7 rising from an end portion of the ship bottom 4 on a stern side, and a stern opening 10 formed in the stern end face 7. The pair of flaps 51 are provided, at the stern end face 7, separated from each other in a ship width direction D2 while avoiding the stern opening 10.

According to the present aspect, the marine vessel 1 can lower, and lift and house an investigation and monitoring instrument, an underwater sailing body, a small boat SB, a fishing net, or the like at an end portion on the stern side via the stern opening 10. Furthermore, the marine vessel 1 can suppress wave making around the stern by the flaps 51 without causing interference between the flaps 51 and an investigation and monitoring instrument, or the like.

(2) A marine vessel 1 according to a second aspect is the marine vessel 1 according to (1) above, wherein each of the flaps 51 includes a lower flap surface 54 extending to the stern side and continuous from the ship bottom 4, and the lower flap surface 54 may extend in a region at or below a lower end of the stern end face 7.

According to the present aspect, the marine vessel 1 can suppress wave making around the stern by the flaps 51.

(3) A marine vessel 1 according to a third aspect is the marine vessel 1 according to (1) or (2) above, wherein a wedge 52 may be provided at an end portion of the ship bottom 4 on the stern side between the pair of flaps 51 in the ship width direction D2.

According to the present aspect, the marine vessel 1 can further suppress wave making around the stern by the flaps 51 and the wedge 52.

(4) A marine vessel 1 according to a fourth aspect is the marine vessel 1 according to (3) above, wherein positions in the ship width direction D2 of end portions of the wedge 52 on outer sides in the ship width direction D2 may overlap with positions in the ship width direction D2 of an end portion of the respective flaps 51 on an inner side in the ship width direction D2.

According to the present aspect, a flow passing between each of the flaps 51 and the wedge 52 can be suppressed.

(5) A marine vessel 1 according to a fifth aspect is the marine vessel 1 according to (3) or (4) above, wherein the wedge 52 may include a lower wedge surface 56 smoothly connected to the ship bottom 4.

According to the present aspect, the generation of flow separation at end portions of the wedge 52 on the ship width direction D2 can be suppressed.

(6) A marine vessel 1 according to a sixth aspect is the marine vessel 1 according to any one of (1) to (5) above, wherein a Froude number Fn of a designed speed may be 0.20 or greater and 0.50 or less.

According to the present aspect, the effect of reducing wave making around the stern can be more favorably achieved.

### Reference Signs List

1 Marine vessel
1a Bow
2 Ship
3 Broadside
4 Ship bottom
5 Upper deck
6 Stern end
7 Stern end face
10 Stern opening
11 Upper opening
12 Lower opening
12a Lower side end
20 Housing portion
21 Slope
30 Center skeg
31 Propeller
32 Strut
33 Tubular support part
34 Rudder
35 Rudder post
36 Propeller shaft
37 Shaft bracket
40 Stern door
50 Stern appendage
51 Flap
52 Wedge
53 Upper flap surface
53a First upper surface
53b Second upper surface
54 Lower flap surface
55 Rear wedge surface
56 Lower wedge surface
56a First lower surface
56b Second lower surface
A.P. Aftermost perpendicular line
C Ship bottom center line
Cr Residual resistance coefficient
D1 Travel direction
D2 Ship width direction
F.P. Foremost perpendicular line
Fn Froude number
Lpp Inter-perpendicular length
Lwl Water line length
P1 Closed position
P2 Open position
SB Small boat
BL Bottom line
WL Load water line
H1 Height (from base line BL to lower end of flap)
H2 Height (from base line BL to load water line WL)
L1 Length (of flap in travel direction)

## Claims

1. A marine vessel (1) comprising:
a ship (2);
a pair of flaps (51); and
a wedge (52) provided at an end portion of a ship bottom (4) on a stern side between the pair of flaps (51) in a ship width direction (D2),
the ship (2) including:
the ship bottom (4),
a stern end face (7) rising from an end portion of the ship bottom (4) on the stern side, and
a stern opening (10) formed in the stern end face (7),
the pair of flaps (51) being provided, at the stern end face (7), separated from each other in the ship width direction (D2) while avoiding the stern opening (10), wherein
positions in the ship width direction (D2) of end portions of the wedge (52) on outer sides in the ship width direction (D2) overlap with positions in the ship width direction (D2) of an end portion of the respective flaps on an inner side in the ship width direction (D2), and
the wedge (52) includes a lower wedge surface (56) smoothly connected to the ship bottom (4),
wherein
the lower wedge surface (56) includes a first lower surface (56a) and a pair of second lower surfaces (56b),
the first lower surface (56a) is formed in a planar shape extending from the ship bottom (4) to the stern side so as to be positioned downward toward the stern side in a side view, wherein
the pair of second lower surfaces (56b) are provided on outer sides of the first lower surface (56a) in the ship width direction (D2), the pair of second lower surfaces (56b) smoothly connect the side end of the first lower surface (56a) on the outer side in the ship width direction (D2) and the ship bottom (4), and wherein
the pair of second lower surfaces (56b) are formed in a triangular shape so that the dimension in the travel direction (D1) becomes smaller toward an outer side in the ship width direction (D2) in a plan view.

2. The marine vessel (1) according to claim 1, wherein
each of the pair of flaps (51) includes a lower flap surface (54) extending to the stern side and continuous from the ship bottom (4), and
the lower flap surface (54) extends in a region at or below a lower end of the stern end face (7).

3. The marine vessel (1) according to claim 1 or 2, wherein a Froude number Fn of a designed speed is 0.20 or greater and 0.50 or less.

## Patentansprüche

1. Wasserfahrzeug (1), das Folgendes umfasst:
ein Schiff (2);
ein Paar Klappen (51); und
einen Keil (52), der an einem Endabschnitt eines Schiffsbodens (4) auf einer Heckseite zwischen dem Paar Klappen (51) in einer Schiffsbreitenrichtung (D2) bereitgestellt ist,
wobei das Schiff (2) einschließt:
den Schiffsboden (4),
eine von einem heckseitigen Endabschnitt des Schiffsbodens (4) aufsteigende Heckstirnfläche (7) und
eine in der Heckstirnfläche (7) ausgebildete Hecköffnung (10), wobei das Paar Klappen (51) an der Heckstirnfläche (7) in Schiffsbreitenrichtung (D2) unter Vermeidung der Hecköffnung (10) voneinander getrennt bereitgestellt ist, wobei
Positionen in Schiffsbreitenrichtung (D2) von Endabschnitten des Keils (52) auf Außenseiten in Schiffsbreitenrichtung (D2) mit Positionen in Schiffsbreitenrichtung (D2) eines Endabschnitts der jeweiligen Klappen auf einer Innenseite in Schiffsbreitenrichtung (D2) überlappen, und
der Keil (52) eine untere Keiloberfläche (56) einschließt, die nahtlos mit dem Schiffsboden (4) verbunden ist,
wobei
die untere Keiloberfläche (56) eine erste untere Oberfläche (56a) und ein Paar zweiter unterer Oberflächen (56b) einschließt,
die erste untere Oberfläche (56a) in einer ebenen Form ausgebildet ist, die sich vom Schiffsboden (4) zur Heckseite erstreckt, um in einer Seitenansicht nach unten zur Heckseite hin positioniert zu sein, wobei
das Paar zweiter unterer Oberflächen (56b) an Außenseiten der ersten unteren Oberfläche (56a) in der Schiffsbreitenrichtung (D2) bereitgestellt ist, das Paar zweiter unterer Oberflächen (56b) das Seitenende der ersten unteren Oberfläche (56a) an der Außenseite in der Schiffsbreitenrichtung (D2) und den Schiffsboden (4) nahtlos verbindet, und wobei
das Paar zweiter unterer Oberflächen (56b) in einer Dreiecksform ausgebildet ist, so dass die Abmessung in der Fahrtrichtung (D1) zu einer Außenseite in der Schiffsbreitenrichtung (D2) in einer Draufsicht kleiner wird.

2. Wasserfahrzeug (1) nach Anspruch 1, wobei
jede des Paars von Klappen (51) eine untere Klappenoberfläche (54) einschließt, die sich zur Heckseite erstreckt und vom Schiffsboden (4) aus durchgehend verläuft, und
die untere Klappenoberfläche (54) sich in einem Bereich an oder unterhalb eines unteren Endes der Heckstirnfläche (7) erstreckt.

3. Wasserfahrzeug (1) nach Anspruch 1 oder 2, wobei eine Froude-Zahl Fn einer Konstruktionsgeschwindigkeit 0,20 oder mehr und 0,50 oder weniger beträgt.

## Revendications

1. Vaisseau (1) comprenant :
un navire (2) ;
une paire de volets (51) ; et
une cale (52) située à une extrémité du fond du navire (4) du côté de la poupe, entre la paire de volets (51) dans la direction de la largeur du navire (D2),
le navire (2), incluant :
le fond du navire (4),
une face d'extrémité de poupe (7) s'élevant à partir d'une partie d'extrémité du fond du navire (4) du côté de la poupe, et
une ouverture de poupe (10) formée dans la face d'extrémité de poupe (7), la paire de volets (51) étant prévue, au niveau de la face d'extrémité de poupe (7), séparée l'une de l'autre dans la direction de la largeur du navire (D2) tout en évitant l'ouverture de poupe (10), dans laquelle
les positions dans la direction de la largeur du navire (D2) des parties d'extrémité de la cale (52) sur les côtés extérieurs dans la direction de la largeur du navire (D2) se chevauchent avec les positions dans la direction de la largeur du navire (D2) d'une partie d'extrémité des volets respectifs sur un côté intérieur dans la direction de la largeur du navire (D2), et
la cale (52) inclut une surface de cale inférieure (56) reliée en douceur au fond du navire (4),
dans lequel
la surface inférieure de la cale (56) inclut une première surface inférieure (56a) et une paire de deuxièmes surfaces inférieures (56b),
la première surface inférieure (56a) a une forme plane qui s'étend du fond du navire (4) à la poupe de manière à être positionnée vers le bas en direction de la poupe dans une vue latérale, dans laquelle
la paire de deuxièmes surfaces inférieures (56b) est fournie sur les côtés extérieurs de la première surface inférieure (56a) dans la direction de la largeur du navire (D2), la paire de deuxièmes surfaces inférieures (56b) relie en douceur l'extrémité latérale de la première surface inférieure (56a) sur le côté extérieur dans la direction de la largeur du navire (D2) et le fond du navire (4), et dans lequel
la paire de deuxièmes surfaces inférieures (56b) a une forme triangulaire de sorte que la dimension dans la direction de déplacement (D1) devient plus petite vers un côté extérieur dans la direction de la largeur du navire (D2) dans une vue en plan.

2. Vaisseau (1) selon la revendication 1, dans lequel
chacun de la paire de volets (51) inclut une surface inférieure de volet (54) s'étendant vers la poupe et continue à partir du fond du navire (4), et
la surface de volet inférieure (54) s'étend dans une région située à l'extrémité inférieure de la face arrière (7) ou en dessous de celle-ci.

3. Vaisseau (1) selon la revendication 1 ou 2, dans lequel le nombre de Froude Fn d'une vitesse prévue est supérieur ou égal à 0,20 et inférieur ou égal à 0,50.
